(19) Europäisches Patentamt
European Patent Office
Office européen des brevets

(11) EP 3 896 830 A1

(12) # DEMANDE DE BREVET EUROPEEN

(43) Date de publication:
**20.10.2021 Bulletin 2021/42**

(51) Int Cl.:
***H02M 1/32*** *(2007.01)*

(21) Numéro de dépôt: **21167935.2**

(22) Date de dépôt: **12.04.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **16.04.2020 FR 2003836**

(71) Demandeur: **Tronico**
**85660 Saint Philbert de Bouaine (FR)**

(72) Inventeurs:
- **MORIN, Cédric**
  **44230 Saint-Sébastien sur Loire (FR)**
- **LUGBULL, Olivier**
  **44860 Pont-Saint-Martin (FR)**
- **PLANTARD, Pascal**
  **44115 Basse-Goulaine (FR)**

(74) Mandataire: **Vidon Brevets & Stratégie**
**16B, rue de Jouanet**
**BP 90333**
**35703 Rennes Cedex 7 (FR)**

(54) **PROCÉDÉ DE CONTRÔLE D'UN CONVERTISSEUR D'ÉNERGIE ÉLECTRIQUE, ET CONVERTISSEUR CORRESPONDANT**

(57) Il est proposé un procédé de contrôle d'un convertisseur d'énergie électrique, comprenant les étapes suivantes, pour au moins une première grandeur physique du convertisseur possédant un maximum variable en fonction d'une pluralité de points de fonctionnement possibles, chacun des points de fonctionnement possibles étant associé à une valeur du maximum variable et étant défini par une valeur d'au moins un paramètre de fonctionnement du convertisseur : détermination d'un point de fonctionnement courant du convertisseur parmi la pluralité de points de fonctionnement possibles ; détermination de la valeur du maximum variable associée au point de fonctionnement courant, appelée première valeur (P1) ; détermination d'une valeur courante de la au moins une première grandeur physique, appelée deuxième valeur (P2) ; et activation ou non d'un moyen de limitation de la au moins une première grandeur physique, en fonction d'un résultat d'une comparaison entre la première valeur (P1) et la deuxième valeur (P2).

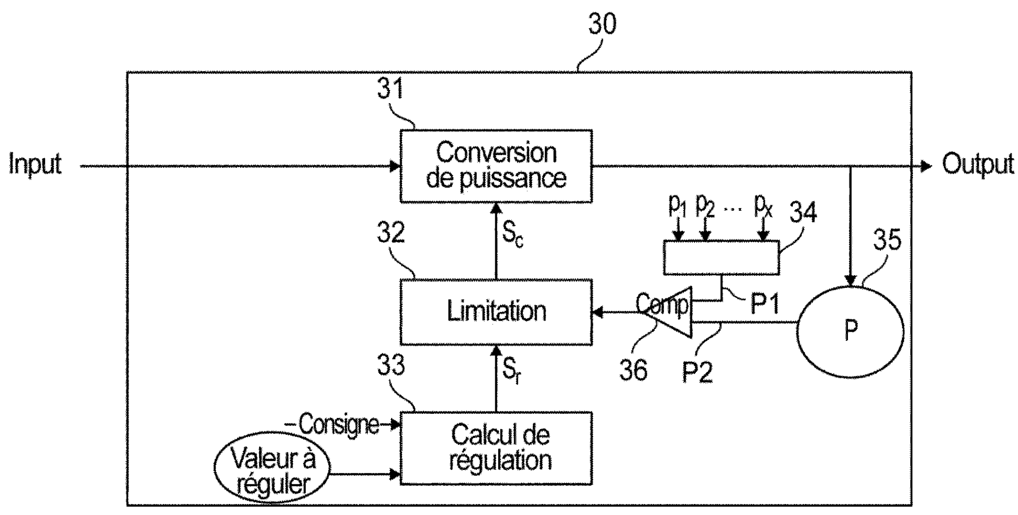


Figure 3

EP 3 896 830 A1

## Description

### *1. DOMAINE TECHNIQUE*

Le domaine de l'invention est celui de la conversion d'énergie électrique. Plus précisément, l'invention concerne un procédé de contrôle d'un convertisseur d'énergie électrique, ainsi qu'un convertisseur correspondant.

Il peut s'agir de tous types de convertisseurs (isolés ou non) : DC/DC, DC/AC, AC/AC, AC/DC.

L'invention a de nombreuses applications, notamment mais non exclusivement avec des sources et des charges de puissance de type batteries, super-capacités, piles à combustibles, panneaux photovoltaïques, bus de tension régulé, charges moteurs ou génératrices, etc.

### *2. ARRIÈRE-PLAN TECHNOLOGIQUE*

On décrit maintenant deux solutions connues de contrôle de la puissance de sortie d'un convertisseur d'énergie électrique de type DC/DC. Une problématique identique existe avec les autres types de convertisseurs (DC/AC, AC/AC et AC/DC).

Selon une première solution connue, une seule contrainte est appliquée : la puissance de sortie doit être inférieure ou égale à une puissance de sortie maximale $P_{max}$ qui est constante quel que soit le point de fonctionnement du convertisseur, c'est-à-dire quel que soit le couple ($V_{low\text{-}side}$, $V_{high\text{-}side}$), avec $V_{low\text{-}side}$ la tension d'entrée du convertisseur (comprise entre $V_{low\text{-}side/min}$ et $V_{low\text{-}side/max}$) et $V_{high\text{-}side}$ la tension de sortie du convertisseur (comprise entre $V_{high\text{-}side/min}$ et $V_{high\text{-}side/max}$).

Selon une deuxième solution connue, il est proposé de combiner :

- une première contrainte de même nature que celle de la première solution connue (à savoir : quel que soit le point de fonctionnement du convertisseur, la puissance de sortie doit être inférieure ou égale à une puissance de sortie maximale $P_{max}$ qui est constante), mais avec une valeur de puissance sortie maximale qui est plus grande que dans la première solution connue ;
- avec deux contraintes supplémentaires :
    - ◦ quel que soit le point de fonctionnement du convertisseur, le courant d'entrée (noté $I_{low\text{-}side}$) doit être inférieur ou égal à un courant d'entrée maximal qui est constant (noté $I_{low\text{-}side/max}$) ; et
    - ◦ quel que soit le point de fonctionnement du convertisseur, le courant de sortie (noté $I_{high\text{-}side}$) doit être inférieur ou égal à un courant de sortie maximal qui est constant (noté $I_{high\text{-}side/max}$).

Comme illustré sur la ***figure 1,*** avec la deuxième solution connue, il y a trois valeurs qui limitent les performances du convertisseur 10 : la puissance maximale $P_{max}$, le courant d'entrée maximal $I_{low\text{-}side/max}$ et le courant de sortie maximal $I_{high\text{-}side/max}$. Une fois le convertisseur conçu, il s'agit de valeurs fixes. Les protections de non dépassement de ces trois limites par le convertisseur comprennent trois comparateurs (référencés 5, 7 et 9) par rapport à ces trois limites, ainsi qu'un bloc de limitation 2 qui reçoit les signaux de sortie des trois comparateurs et génère un signal de contrôle $S_c$ visant à écrêter le fonctionnement d'un bloc de conversion de puissance 1 si une des trois valeurs limites est dépassée. A cet effet, les trois valeurs limites sont comparées, grâce aux trois comparateurs précités (5, 7 et 9) à trois valeurs courantes ($I_{low\text{-}side}$, $I_{high\text{-}side}$ et P). Les trois valeurs courantes sont obtenues grâce à trois capteurs (référencés 4, 6 et 8) réalisant de manière continue des mesures et/ou calculs de la puissance, du courant d'entrée et du courant de sortie. Dans le mode de réalisation illustré, le bloc de limitation 2 reçoit également un signal de régulation $S_r$ généré par un bloc de régulation 3 qui reçoit en entrée une valeur à réguler et une valeur de consigne correspondante. Si aucune des trois valeurs limites précitées n'est dépassée, le signal de contrôle $S_c$ généré par le bloc de limitation 2 est fonction du signal de régulation $S_r$ et vise à agir sur la valeur à réguler (sans écrêtage de la puissance de sortie).

De cette façon, pour certains points de fonctionnement (appelés par la suite « premier ensemble de points de fonctionnement »), c'est une des contraintes supplémentaires qui s'applique pour limiter la puissance de sortie P du convertisseur, celle-ci pouvant être exprimée en fonction du courant d'entrée ($P = V_{low\text{-}side} \times I_{low\text{-}side}$) ou en fonction du courant de sortie ($P = V_{high\text{-}side} \times I_{high\text{-}side}$). Pour les autres points de fonctionnement (appelés par la suite « deuxième ensemble de points de fonctionnement »), c'est la première contrainte qui s'applique pour limiter la puissance de sortie du convertisseur, mais avec une valeur de puissance sortie maximale qui est plus grande que dans la première solution connue. La deuxième solution connue permet donc, par rapport à la première, d'augmenter la puissance de sortie maximale atteignable sur certains points de fonctionnement (notamment ceux du deuxième ensemble).

La ***figure 6*** est un exemple de tableau de puissances maximales obtenues, pour divers points de fonctionnement, avec le convertisseur de la figure 1 et les constantes suivantes : $I_{low\text{-}side/max}$ = 38A, $I_{high\text{-}side/max}$ = 32A et $P_{max}$ = 18kW. La première colonne 61 contient la plage [$V_{low\text{-}side/min}$, $V_{low\text{-}side/max}$] exprimée en V, avec : $V_{low\text{-}side/min}$ = 400V et

$V_{low\text{-}side/max}$ = 600V. La première ligne 62 contient la plage [$V_{high\text{-}side/min}$, $V_{high\text{-}side/max}$] (en Volts), avec : $V_{high\text{-}side/min}$ = 500V et $V_{high\text{-}side/max}$ = 700V. Chaque case à une intersection ligne/colonne, correspondant à un couple ($V_{low\text{-}side}$, $V_{high\text{-}side}$), contient la valeur de puissance maximale associée, exprimée en kW. Par exemple, pour le point de fonctionnement ($V_{low\text{-}side}$ = 600V, $V_{high\text{-}side}$ = 590V), on a une puissance maximale de 18 kW (case référencée 63). La zone référencée 64 correspond au deuxième ensemble précité de points de fonctionnement (pour lesquels c'est la première contrainte qui s'applique), avec dans cet exemple une puissance maximale de 18 kW.

Pour autant, la deuxième solution connue n'est pas pleinement satisfaisante. En effet, les deux contraintes supplémentaires s'appuient sur deux paramètres limitant la fourniture de puissance, à savoir le courant d'entrée et le courant de sortie. Pour la première contrainte, tous les autres paramètres limitant la fourniture de puissance sont regroupés sous une unique limitation qui est la puissance de sortie maximale (hors courant). Or cette puissance de sortie maximale devant être opérationnelle sur tous les points de fonctionnement, elle est donc en réalité le minimum de toutes les puissances maximales associées à tous les points de fonctionnement (voir explication détaillée ci-dessous). Un inconvénient de la deuxième solution connue est donc qu'elle ne permet donc pas d'optimiser la puissance délivrée sur tous les points de fonctionnement.

Explication détaillée du « minimum de toutes les puissances maximales » : le point de fonctionnement pour lequel la puissance est minimale (c'est-à-dire le point de fonctionnement dont la puissance maximale associée est le minimum de toutes les puissances maximales associées aux différents points de fonctionnement) est connu, il s'agit de l'un des « points d'extrémités » de la plage des points de fonctionnement (plage à deux dimensions : l'une correspond à la tension d'entrée et l'autre à la tension de sortie). Ces points d'extrémités sont ceux pour lesquels la tension d'entrée ou la tension de sortie est minimale ou maximale. Par conséquent, les calculs de puissances maximales (une par point de fonctionnement), puis de détermination du minimum de celles-ci (pour définir la puissance maximale sur toute la plage), sont réalisés uniquement sur les points d'extrémités afin que des conditions limites (par exemple de température et de courant) de composants critiques du convertisseur (par exemple des diodes, des transistors et des éléments selfiques) ne soient pas dépassées. Les autres composants du système (par exemple les capteurs de courant ou les pistes de cuivre) sont dimensionnés pour fonctionner dans la plage souhaitée sans jamais être des paramètres critiques. La démarche peut être résumée comme suit : définition des plages de tensions souhaitées, dimensionnement aux points d'extrémités des composants critiques (définition de la puissance maximale atteignable sur toute la plage) et choix des autres composants afin qu'ils soient compatibles avec la puissance maximale définie).

En pratique, pour limiter l'impact de l'inconvénient précité, il est parfois proposé de limiter la plage des points de fonctionnement pour éviter de réduire la puissance de sortie maximale à cause de conditions extrêmes. En d'autres termes, pour éviter que le minimum de toutes les puissances maximales associées à tous les points de fonctionnement ne soit trop faible, on réduit la plage. On comprend que cette limitation de la plage des points de fonctionnement n'est pas une solution satisfaisante.

## 3. OBJECTIFS

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique (procédé et convertisseur correspondant) de contrôle d'un convertisseur d'énergie électrique, qui permette d'augmenter encore, par rapport à la deuxième solution connue, la puissance de sortie maximale atteignable sur certains points de fonctionnement.

Plus généralement, dans au moins un mode de réalisation de l'invention, un objectif est de fournir une technique (procédé et convertisseur correspondant) de contrôle d'un convertisseur d'énergie électrique, qui permette d'améliorer, sur certains points de fonctionnement, les performances du convertisseur pour au moins une grandeur physique de celui-ci (notamment mais non exclusivement sa puissance de sortie).

Un autre objectif d'au moins un mode de réalisation de l'invention est de fournir une telle technique permettant d'avoir des plages de fonctionnement plus larges qu'avec la deuxième solution connue.

Un objectif complémentaire d'au moins un mode de réalisation de l'invention est de fournir une telle technique qui soit simple à mettre en œuvre et peu coûteuse.

## 4. RÉSUMÉ

Dans un mode de réalisation particulier de l'invention, il est proposé un procédé de contrôle d'un convertisseur d'énergie électrique, comprenant les étapes suivantes, pour au moins une première grandeur physique du convertisseur possédant un maximum variable en fonction d'une pluralité de points de fonctionnement possibles, chacun des points de fonctionnement possibles étant associé à une valeur du maximum variable et étant défini par une valeur d'au moins un paramètre de fonctionnement du convertisseur :

- détermination d'un point de fonctionnement courant du convertisseur parmi ladite pluralité de points de fonctionnement possibles ;
- détermination de la valeur du maximum variable associée au point de fonctionnement courant, appelée première valeur ;
- détermination d'une valeur courante de ladite au moins une première grandeur physique, appelée deuxième valeur ; et
- activation ou non d'un moyen de limitation de ladite au moins une première grandeur physique, en fonction d'un résultat d'une comparaison entre la première valeur et la deuxième valeur.

Ainsi, la solution proposée propose une approche tout à fait nouvelle et inventive consistant, pour au moins une première grandeur physique du convertisseur (qui peut notamment mais non exclusivement être la puissance de sortie du convertisseur), à définir sur chaque point de fonctionnement possible une valeur du maximum de cette première grandeur physique. De cette façon, le maximum de la première grandeur physique n'est pas fixe sur la plage de fonctionnement (c'est-à-dire sur l'ensemble des points de fonctionnement possibles), mais est un maximum variable tel qu'à chaque point de fonctionnement est associée une valeur de ce maximum variable.
En s'appuyant sur cette nouvelle approche (et donc sur le fait qu'à chaque point de fonctionnement est associée une valeur du maximum variable précité), le procédé proposé consiste, pour un point de fonctionnement courant (et donc de manière itérative pour des points de fonctionnement successifs dans le temps), à déterminer la valeur du maximum variable qui est associée à ce point de fonctionnement courant et à activer ou non une limitation de la première grandeur physique (par exemple cette limitation est un écrêtage de la puissance de sortie) en fonction du résultat d'une comparaison entre cette valeur du maximum variable et une valeur courante de la première grandeur physique.
Le procédé proposé permet d'améliorer l'utilisation du convertisseur en l'utilisant en permanence, c'est-à-dire pour chaque point de fonctionnement courant, à la limite fonctionnelle de ladite au moins une première grandeur physique (limite correspondant à la valeur du maximum variable associée au point de fonctionnement courant). En d'autres termes, la solution proposée permet, pour calculer le maximum de la première grandeur physique, de décorréler la valeur du maximum pour le point de fonctionnement courant, de la plage des points de fonctionnement possibles.
En particulier, dans le cas où la première grandeur physique est la puissance de sortie du convertisseur, le procédé proposé ne nécessite pas (contrairement à la deuxième solution connue) de calculer le minimum de toutes les puissances maximales associées à tous les points de fonctionnement de la plage. Dans ce cas, le procédé proposé permet d'améliorer (voire d'optimiser) la puissance délivrée par le convertisseur pour certains points de fonctionnement.
En outre, le procédé proposé permet d'avoir des plages de fonctionnement plus larges qu'avec la deuxième solution connue (pas de limitation de la plage des points de fonctionnement pour éviter de réduire la puissance de sortie maximale à cause de conditions extrêmes).
Selon une caractéristique particulière, le moyen de limitation de ladite au moins une première grandeur physique est activé si la deuxième valeur est supérieure ou égale à la première valeur.
Ainsi, on évite ou, à tout le moins, on réduit le dépassement de la valeur du maximum variable qui est associée au point de fonctionnement courant. Dans une variante, le moyen de limitation est activé encore plus tôt, par exemple dès que la deuxième valeur atteint un pourcentage prédéterminé (par exemple 95%) de la première valeur, afin d'éviter autant que faire se peut le dépassement de la première valeur (valeur du maximum variable qui est associée au point de fonctionnement courant).
Selon une caractéristique particulière, dans la détermination de ladite première valeur :

- si un unique facteur limitant de ladite au moins une première grandeur physique est pris en compte et possède une valeur limite, la première valeur résulte du calcul suivant:
  ◦ calcul de la première valeur en fonction de la valeur limite du facteur limitant et du point de fonctionnement courant ; et
- si une pluralité de facteurs limitants de ladite au moins une première grandeur physique sont pris en compte et possèdent chacun une valeur limite associée, la première valeur résulte des calculs suivants :

  ◦ pour chacun des facteurs limitants, calcul d'une valeur du maximum variable de ladite au moins une première grandeur physique, en fonction de la valeur limite du facteur limitant et du point de fonctionnement courant ; et
  ◦ sélection pour la première valeur d'une valeur minimale parmi les valeurs du maximum variable calculées pour la pluralité de facteurs limitants.

La détermination de la première valeur (valeur du maximum variable associée au point de fonctionnement courant) est d'autant plus performante que le nombre de facteurs limitants est élevé. Pour des facteurs qui ne sont pas pris en compte, on choisit des valeurs (c'est-à-dire on effectue un dimensionnement) garantissant qu'ils ne soient pas limitants (et qu'ils n'aient donc pas à être intégrés dans les calculs).
Selon une caractéristique particulière, l'unique facteur limitant ou chacun des facteurs limitants appartient au groupe comprenant :

- courant d'entrée du convertisseur ;
- courant de sortie du convertisseur ;
- ondulation du courant d'entrée du convertisseur ;
- ondulation du courant de sortie du convertisseur ;
- rapport cyclique du convertisseur ;
- température d'une puce électronique intégrant au moins un composant compris dans le convertisseur, notamment une diode ou un transistor ;
- température d'un élément selfique compris dans le convertisseur ;
- courant traversant une puce électronique intégrant au moins un composant compris dans le convertisseur, notamment une diode ou un transistor ;
- courant traversant un élément selfique compris dans le convertisseur ;
- puissance dissipée par un élément selfique compris dans le convertisseur ;
- courant de saturation d'un élément selfique compris dans le convertisseur ; et
- facteur extérieur au convertisseur.

Cette liste de facteurs limitants n'est pas exhaustive.

Selon une caractéristique particulière, ladite au moins une première grandeur physique appartient au groupe comprenant :

- une puissance de sortie du convertisseur ;
- une puissance d'entrée du convertisseur ;
- un courant de sortie du convertisseur ;
- un courant d'entrée du convertisseur ; et
- des pertes dans le convertisseur.

Ainsi, le principe général de la solution proposée n'est pas limité au cas où la première grandeur physique est la puissance de sortie du convertisseur. Cette liste de premières grandeurs physiques n'est pas exhaustive.

Dans une première implémentation particulière, la détermination de la première valeur comprend une interrogation, en fonction du point de fonctionnement courant du convertisseur, d'une table préalablement calculée et associant à chacun des points de fonctionnement possibles une valeur du maximum variable.

Ainsi, dans cette première implémentation, les calculs (des valeurs du maximum variable qui sont associées aux différents points de fonctionnement) sont effectués à l'avance, ce qui simplifie la mise en œuvre du procédé par le convertisseur. Dans ce cas, les calculs s'appuient sur une modélisation du ou des facteurs limitants de la première grandeur physique du convertisseur.

Dans une deuxième implémentation particulière, la détermination de la première valeur comprend un calcul, au moins partiellement dynamique, de la première valeur en fonction du point de fonctionnement courant du convertisseur.

Ainsi, dans cette deuxième implémentation, les calculs (des valeurs du maximum variable qui sont associées aux différents points de fonctionnement) sont en partie ou en totalité (voir description plus bas) effectués à la volée. Dans ce cas, les calculs (ou une partie d'entre eux) peuvent s'appuyer sur de vraies mesures (et non pas sur une modélisation) du ou des facteurs limitants de la première grandeur physique du convertisseur.

Selon une caractéristique particulière, le procédé comprend les étapes suivantes, pour au moins une deuxième grandeur physique du convertisseur possédant un maximum fixe pour la pluralité de points de fonctionnement possibles, le maximum fixe possédant une troisième valeur :

- détermination d'une valeur courante de ladite au moins une deuxième grandeur physique, appelée quatrième valeur ; et
- activation ou non d'un moyen de limitation de ladite au moins une deuxième grandeur physique, en fonction d'un résultat d'une comparaison entre la troisième valeur et la quatrième valeur.

Ainsi, le procédé proposé permet de contrôler également au moins une deuxième grandeur physique du convertisseur, qui possède un maximum fixe quel que soit le point de fonctionnement (et se distingue donc de ladite au moins une première grandeur physique qui elle possède un maximum variable en fonction des points de fonctionnement). Un avantage est que chaque deuxième grandeur physique qui est contrôlée séparément ne constitue plus un facteur limitant devant être intégré aux calculs de contrôle de ladite au moins une première grandeur physique, donc ces calculs sont simplifiés.

Selon une caractéristique particulière, le moyen de limitation de ladite au moins une deuxième grandeur physique est activé si la quatrième valeur est supérieure ou égale à la troisième valeur.

Ainsi, on évite ou, à tout le moins, on réduit le dépassement de la valeur du maximum fixe (appelée ici « troisième valeur ») de la deuxième grandeur physique. Dans une variante, le moyen de limitation est activé encore plus tôt, par exemple dès que la quatrième valeur atteint un pourcentage prédéterminé (par exemple 95%) de la troisième valeur, afin d'éviter autant que faire se peut le dépassement de la troisième valeur (valeur du maximum fixe).

Selon une caractéristique particulière, ladite au moins une deuxième grandeur physique appartient au groupe comprenant :

- température de puce d'un composant compris dans le convertisseur ; et
- température d'un composant compris dans le convertisseur ;
- température d'un élément à proximité d'un composant compris dans le convertisseur ou à proximité d'une puce d'un composant compris dans le convertisseur ;
- tension d'un point à l'intérieur du convertisseur ; et
- écart de tension entre deux points à l'intérieur du convertisseur.

Cette liste de deuxièmes grandeurs physiques n'est pas exhaustive.

Selon une caractéristique particulière, ledit au moins un paramètre de fonctionnement du convertisseur appartient au groupe comprenant :

- température ambiante ;
- température de refroidissement ;
- tension d'entrée ;
- tension de sortie ;
- résistance thermique ;
- tension directe Vf d'au moins une diode comprise dans le convertisseur ;
- résistance Rdson d'au moins un transistor compris dans le convertisseur ;
- caractéristique de pertes en commutation d'au moins un élément de commutation du convertisseur ;
- résistance électrique d'au moins un conducteur de courant du convertisseur ;
- caractéristique d'au moins un élément bobiné du convertisseur ;
- résistance thermique d'au moins un élément de refroidissement du convertisseur.

Cette liste de paramètres de fonctionnement n'est pas exhaustive.

Dans un autre mode de réalisation de l'invention, il est proposé un convertisseur d'énergie électrique comprenant, pour au moins une première grandeur physique du convertisseur possédant un maximum variable en fonction d'une pluralité de points de fonctionnement possibles, chacun des points de fonctionnement possibles étant associé à une valeur du maximum variable et étant défini par une valeur courante d'au moins un paramètre de fonctionnement du convertisseur :

- des moyens de détermination d'un point de fonctionnement courant du convertisseur parmi ladite pluralité de points de fonctionnement possibles ;
- des moyens de détermination de la valeur du maximum variable associée au point de fonctionnement courant, appelée première valeur ;
- des moyens de détermination d'une valeur courante de ladite au moins une première grandeur physique, appelée deuxième valeur ; et
- des moyens d'activation ou non d'un moyen de limitation de ladite au moins une première grandeur physique, en fonction d'un résultat d'une comparaison entre la première valeur et la deuxième valeur.

En d'autres termes, le convertisseur comprend divers moyens configurés pour la mise en œuvre du procédé détaillé ci-dessus, dans l'un quelconque de ses différents modes de réalisation. Les avantages techniques associés ont été décrits en détail plus haut.

Selon une caractéristique particulière, le convertisseur comprend en outre, pour au moins une deuxième grandeur physique du convertisseur possédant un maximum fixe pour la pluralité de points de fonctionnement possibles, le maximum fixe possédant une troisième valeur :

- des moyens de détermination d'une valeur courante de ladite au moins une deuxième grandeur physique, appelée quatrième valeur ; et
- des moyens d'activation ou non d'un moyen de limitation de ladite au moins une deuxième grandeur physique, en fonction d'un résultat d'une comparaison entre la troisième valeur et la quatrième valeur.

## 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :

[Fig. 1], déjà décrite en relation avec l'art antérieur, illustre un exemple de convertisseur connu de type DC/DC configuré pour mettre en œuvre une solution connue de contrôle de la puissance de sortie ;
[Fig. 2] présente un organigramme d'un procédé, selon un mode de réalisation particulier de l'invention, de contrôle d'au moins une première grandeur physique (puissance de sortie, par exemple) d'un convertisseur de type DC/DC ;
[Fig. 3] illustre un exemple de convertisseur de type DC/DC configuré pour mettre en œuvre le procédé selon le mode de réalisation de la figure 2 ;
[Fig. 4] illustre un algorithme de calcul d'une table utilisée dans une mise en œuvre particulière de l'étape 23 de la figure 2, cette table associant à chacun des points de fonctionnement possibles une valeur du maximum variable ;
[Fig. 5] illustre un exemple de table obtenue en exécutant l'algorithme de la figure 4;
[Fig. 6] est un exemple de tableau de puissances maximales obtenues, pour divers points de fonctionnement, avec le convertisseur de la figure 1 (connu) ;
[Fig. 7] est un exemple de tableau de puissances maximales obtenues, pour divers points de fonctionnement, avec le convertisseur de la figure 3 (mode de réalisation particulier de l'invention) ;
[Fig. 8] présente un organigramme d'un procédé, selon un mode de réalisation particulier de l'invention, de contrôle d'au moins une deuxième grandeur physique (température de puce d'un composant, par exemple) d'un convertisseur de type DC/DC ; et
[Fig. 9] présente la structure du bloc 34 de la figure 3 (bloc de détermination de la valeur P1), selon un mode de réalisation particulier de l'invention.

## 6. DESCRIPTION DÉTAILLÉE

Sur toutes les figures du présent document, les éléments et étapes identiques sont désignés par une même référence numérique.

On présente maintenant, en relation avec la **figure 2,** un mode de réalisation particulier du procédé selon l'invention de contrôle d'au moins une première grandeur physique d'un convertisseur d'énergie électrique de type DC/DC. Comme déjà mentionné plus haut, la présente invention n'est pas limitée à ce type de convertisseur et s'applique également aux convertisseurs d'autres types (isolés ou non) : DC/AC, AC/AC et AC/DC.

Comme détaillé par la suite, la première grandeur physique du convertisseur possède un maximum variable en fonction d'une pluralité de points de fonctionnement possibles. Chacun des points de fonctionnement possibles est associé à une valeur du maximum variable (plusieurs points de fonctionnement peuvent être associés à la même valeur du maximum variable).

Chacun des points de fonctionnement possibles est défini par la valeur d'un ou plusieurs paramètres de fonctionnement du convertisseur, comme par exemple (liste non exhaustive) :

- la température ambiante de l'espace dans lequel est placé le convertisseur ;
- la température de refroidissement (température du fluide (liquide par exemple) de refroidissement utilisé dans le convertisseur) ;
- la tension d'entrée du convertisseur ;
- la tension de sortie du convertisseur ;
- la résistance thermique du convertisseur ;
- la tension directe Vf d'au moins une diode comprise dans le convertisseur ;
- la résistance Rdson (pour « résistance drain-source on-resistance » en anglais) d'au moins un transistor compris dans le convertisseur ;
- la caractéristique de pertes en commutation d'au moins un élément de commutation du convertisseur (transistor, diode...) ;
- la résistance électrique d'au moins un conducteur de courant du convertisseur (PCB, câbles, fil des éléments bobinés...) ;
- au moins une caractéristique d'au moins un élément bobiné du convertisseur ;
- la résistance thermique d'au moins un élément de refroidissement du convertisseur ;
- ...

Les paramètres de fonctionnement sont donc des paramètres variables dont nous pouvons obtenir l'information d'évolution dans le temps (c'est-à-dire les valeurs successives), soit par une information extérieure (par exemple, réception par communication de conditions d'utilisation du convertisseur), soit par une mesure interne (par exemple, mesures de tensions).

Dans la suite de la description, on se place à titre d'exemple dans le cas particulier où la première grandeur physique contrôlée est la puissance de sortie du convertisseur et où chaque point de fonctionnement est défini par les valeurs d'un couple de paramètres de fonctionnement : la tension d'entrée du convertisseur ($V_{low\text{-}side}$) et la tension de sortie du convertisseur ($V_{high\text{-}side}$).

Comme déjà mentionné plus haut, la présente invention n'est pas limitée à ce cas particulier. Elle s'applique également si le contrôle précité est complété ou remplacé par le contrôle d'une ou plusieurs autre(s) première(s) grandeur(s) physique(s), possédant chacune un maximum qui est variable en fonction d'une pluralité de points de fonctionnement possibles :

- puissance d'entrée du convertisseur ;
- courant de sortie du convertisseur ;
- courant d'entrée du convertisseur ;
- pertes dans le convertisseur ;
- ...

Elle s'applique également si les points de fonctionnement sont définis différemment, c'est-à-dire avec un ou plusieurs paramètres de fonctionnement autre(s) que le couple des tensions d'entrée et de sortie du convertisseur ($V_{low\text{-}side}$, $V_{high\text{-}side}$).

Dans l'exemple de la figure 2, le procédé comprend les étapes 22 à 26 qui, après l'étape de début 21, sont effectuées de manière itérative (c'est-à-dire pour des points de fonctionnement successifs dans le temps).

Etape 22 : détermination d'un point de fonctionnement courant du convertisseur parmi la pluralité de points de fonctionnement possibles. En d'autres termes, on détermine des valeurs courantes pour le couple des tensions d'entrée et de sortie du convertisseur ($V_{low\text{-}side}$, $V_{high\text{-}side}$).

Etape 23 : détermination de la valeur du maximum variable associée au point de fonctionnement courant, appelée première valeur P1.

Si un unique facteur limitant de la puissance de sortie est pris en compte et possède une valeur limite, la première valeur P1 est calculée en fonction de la valeur limite de l'unique facteur limitant et du point de fonctionnement courant.

Si une pluralité de facteurs limitants de la puissance de sortie sont pris en compte et possèdent chacun une valeur limite associée, la première valeur P1 résulte des calculs suivants :

- pour chacun des facteurs limitants, calcul d'une valeur du maximum variable de la puissance de sortie, en fonction de la valeur limite du facteur limitant et du point de fonctionnement courant ; et
- sélection pour la première valeur P1 d'une valeur minimale parmi les valeurs du maximum variable calculées pour la pluralité de facteurs limitants.

Par facteurs limitants, on entend notamment, mais non exclusivement :

- le courant d'entrée du convertisseur ($I_{low\text{-}side}$) ;
- le courant de sortie du convertisseur ($I_{high\text{-}side}$) ;
- l'ondulation du courant d'entrée du convertisseur ;
- l'ondulation du courant de sortie du convertisseur ;
- le rapport cyclique du convertisseur ;
- la température d'une puce électronique intégrant au moins un composant compris dans le convertisseur, notamment une diode ou un transistor ;
- la température d'un élément selfique compris dans le convertisseur ;
- le courant traversant une puce électronique intégrant au moins un composant compris dans le convertisseur, notamment une diode ou un transistor ;
- le courant traversant un élément selfique compris dans le convertisseur ;
- la puissance dissipée par un élément selfique compris dans le convertisseur ;
- le courant de saturation d'un élément selfique compris dans le convertisseur ;
- des facteurs extérieurs au convertisseur (c'est-à-dire liés à l'environnement du convertisseur), comme notamment (mais non exclusivement) : état de vie d'une pile à combustible, état de charge ou de vie d'une batterie ou d'une supercapacité, température extérieure... ;
- ...

Exemple : calcul d'une valeur (notée $MAX(P_{out})$) du maximum variable de la puissance de sortie (notée $P_{out}$) dans le cas particulier où le facteur limitant est la température (notée $Temp_{tr}$) d'une puce électronique intégrant un transistor.

On sait que la puissance du transistor s'écrit :

$$P_{tr} = \frac{R_{dson}}{3} * (I_{max})^2 * \frac{(V_{high-side} - V_{low-side})}{V_{high-side}}$$

avec $I_{max}$ le courant maximal dans le transistor et $R_{dson}$ la résistance « drain-source on-resistance » du transistor.

On sait par ailleurs que :

$$I_{max} = 2 * \frac{P_{out}}{V_{low-side}}$$

On en déduit que :

$$P_{tr} = 4 * \frac{R_{dson}}{3} * (P_{out})^2 * \frac{V_{high-side} - V_{low-side}}{V_{high-side} * (V_{low-side})^2}$$

D'où:

$$P_{out} = \sqrt{\frac{3 * P_{tr}}{4 * R_{dson}} * \frac{V_{high-side} * (V_{low-side})^2}{V_{high-side} - V_{low-side}}}$$

On sait par ailleurs que :

$$P_{tr} = \frac{Temp_{tr} - Temp_{eau}}{R_{th.tr}}$$

avec $Temp_{eau}$ la température de l'eau de refroidissement du convertisseur et $R_{th.tr}$ la résistance thermique du transistor.

On en déduit que :

$$P_{out} = \sqrt{\frac{3}{4 * R_{dson}} * \frac{V_{high-side} * (V_{low-side})^2}{V_{high-side} - V_{low-side}} * \frac{Temp_{tr} - Temp_{eau}}{R_{th.tr}}}$$

D'où:

$$MAX(P_{out}) = \sqrt{\frac{3}{4 * R_{dson}} * \frac{V_{high-side} * (V_{low-side})^2}{V_{high-side} - V_{low-side}} * \frac{MAX(Temp_{tr}) - Temp_{eau}}{R_{th.tr}}}$$

En résumé, dans cet exemple, pour le facteur limitant $Temp_{tr}$, on calcule une valeur du maximum variable ($MAX(P_{out})$) de la puissance de sortie, en fonction de la valeur limite $MAX(Temp_{tr})$ du facteur limitant et du point de fonctionnement courant (défini par le couple de paramètres de fonctionnement $V_{low-side}$ et $V_{high-side}$). Comme indiqué plus haut, si une pluralité de facteurs limitants de la puissance de sortie sont pris en compte, on fait de même pour chacun des autres facteurs limitants (calcul pour chacun d'une valeur du maximum variable de la puissance de sortie, en fonction de la valeur limite du facteur limitant et du point de fonctionnement courant) puis on obtient la valeur P1 en sélectionnant une valeur minimale parmi les valeurs du maximum variable calculées pour la pluralité de facteurs limitants.

Dans une implémentation particulière, la détermination de la première valeur P1 comprend une interrogation, en fonction du point de fonctionnement courant du convertisseur, d'une table préalablement calculée et associant à chacun des points de fonctionnement possibles une valeur du maximum variable. Une telle table est aussi appelée « matrice à k dimensions, avec k le nombre de paramètres de fonctionnement définissant chaque point de fonctionnement. Par exemple, k=2 dans le cas où chaque point de fonctionnement est défini par les valeurs du couple de paramètres de fonctionnement $V_{low\text{-}side}$ et $V_{high\text{-}side}$.

Dans une variante, la détermination de la première valeur P1, en fonction du point de fonctionnement courant du convertisseur, comprend un calcul au moins partiellement dynamique :

- dans une première implémentation de la variante précitée, le calcul de la première valeur P1 est entièrement dynamique (c'est-à-dire entièrement effectué à la volée) ;
- dans une deuxième implémentation de la variante précitée, le calcul de la première valeur P1 comprend une première partie de sous-calculs effectuée au préalable et une deuxième partie de sous-calculs effectuée à la volée. Les résultats de la première partie des sous-calculs (aussi appelés « résultats intermédiaires ») sont par exemple stockés dans le convertisseur sous la forme d'une ou plusieurs sous-table(s) (aussi appelée(s) « matrice(s) à k' dimensions », avec k'<k) qui est (sont) utilisée(s) comme données d'entrée au cours de la deuxième partie des sous-calculs, en combinaison avec des informations courantes (reçues ou découlant de vraies mesures en temps réel) relatives aux k-k' dimension(s) (c'est-à-dire au(x) k-k' paramètre(s) de fonctionnement) non utilisées dans la ou les matrice(s) à k' dimensions.

Etape 24 : détermination (par mesure et/ou calcul) d'une valeur courante de la puissance de sortie, appelée deuxième valeur P2.

Etape 25 : comparaison de P2 (valeur courante de la puissance de sortie) avec P1 (valeur du maximum variable associée au point de fonctionnement courant). Dans une implémentation particulière, test « P2 est-elle supérieure ou égale à P1 ? ».

Etape 26 : activation ou non d'un moyen de limitation de la puissance de sortie (un tel moyen de limitation est classique et bien connu de l'homme du métier ; il n'est donc pas décrit plus en détail), en fonction du résultat de la comparaison de l'étape 25. Dans une implémentation particulière, limitation de la puissance de sortie si P2 est supérieure ou égale à P1.

La **figure 3** illustre un exemple de convertisseur de type DC/DC (référencé 30) configuré pour mettre en œuvre le procédé selon le mode de réalisation de la figure 2.

Contrairement à la solution connue de la figure 1, il y a une seule valeur qui limite les performances du convertisseur 30, à savoir P1 la valeur du maximum variable associée au point de fonctionnement courant. En d'autres termes, la puissance de sortie du convertisseur possède un maximum qui est variable (en fonction des points de fonctionnement), et non pas fixe comme dans la solution connue de la figure 1.

Le convertisseur 30 de la figure 2 comprend :

- un bloc de conversion de puissance 31 ;
- un bloc de régulation 33, qui reçoit en entrée une valeur à réguler et une valeur de consigne correspondante, et qui génère un signal de régulation $S_r$ ;
- un bloc de limitation 32 qui reçoit le signal de contrôle $S_c$ et le signal de sortie d'un comparateur 36 ; le bloc de limitation 32 génère un signal de contrôle $S_c$ qui vise à écrêter le fonctionnement du bloc de conversion de puissance 1, si le signal de sortie du comparateur 36 indique que la valeur P1 est atteinte ou dépassée par la valeur P2 (valeur courante de la puissance de sortie, fournie par un bloc de mesure et/ou de calcul 35 réalisant de manière continue des mesures et/ou calculs de la puissance de sortie) ; si le signal de sortie du comparateur 36 indique que la valeur P2 est inférieure à la valeur P1, le signal de contrôle $S_c$ généré par le bloc de limitation 32 est fonction du signal de régulation $S_r$ et vise à agir sur la valeur à réguler (sans écrêtage de la puissance de sortie).

Les blocs de conversion de puissance 31, de limitation 32 et de régulation 33 sont des blocs classiques et bien connus de l'homme du métier. Ils ne sont donc pas décrits plus en détail.

Le convertisseur 30 comprend en outre un bloc 34 de détermination de la valeur P1 (valeur du maximum variable associée au point de fonctionnement courant). Il reçoit la valeur courante du ou des paramètres de fonctionnement définissant le point de fonctionnement courant (référencés $p_1$, $p_2$ ... $p_x$ sur la figure 3). Dans l'exemple mentionné plus haut, ce sont les valeurs courantes pour le couple des tensions d'entrée et de sortie du convertisseur ($V_{low\text{-}side}$, $V_{high\text{-}side}$).

En résumé, il existe les liens suivants entre les blocs de la figure 3 et les étapes de la figure 2 :

- le bloc 34 de détermination de la valeur P1 effectue les étapes 22 et 23 ;
- le bloc de mesure et/ou de calcul 35 effectue l'étape 24 ;
- le comparateur 36 effectue l'étape 25 ; et
- le bloc de limitation 32 effectue l'étape 26.

La ***figure 9*** présente la structure du bloc 34 de détermination de la valeur P1, selon un mode de réalisation particulier de l'invention. Cette structure comprend une mémoire vive 342 (par exemple une mémoire RAM), une mémoire morte 343 (par exemple une mémoire ROM ou un disque dur) et une unité de traitement 341 (équipée par exemple d'un processeur, et pilotée par un programme d'ordinateur 3430 stocké dans la mémoire morte 343). A l'initialisation, les instructions de code du programme d'ordinateur 3430 sont par exemple chargées dans la mémoire vive 342 avant d'être exécutées par le processeur de l'unité de traitement 341. Cette figure 9 illustre seulement une manière particulière, parmi plusieurs possibles, d'implémenter le bloc 34 de détermination de la valeur P1. En effet, ce dernier s'implémente indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas d'une implémentation sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

La ***figure 4*** illustre un algorithme de calcul de la table mentionnée plus haut pour une mise en œuvre particulière de l'étape 23 de la figure 2. Pour mémoire, cette table associe à chaque point de fonctionnement possible, c'est-à-dire à chaque couple de tensions d'entrée et de sortie du convertisseur ($V_{low\text{-}side}$, $V_{high\text{-}side}$), une valeur P1 du maximum variable (c'est-à-dire une valeur maximale de la puissance de sortie) pour ce point de fonctionnement. Cette table est appelée « Power_map », et on note « Power_map(i,j) » la valeur P1 pour le point de fonctionnement (i,j), avec i une valeur de la tension d'entrée $V_{low\text{-}side}$ comprise dans la plage [$V_{low\text{-}side/min}$, $V_{low\text{-}side/max}$], et j une valeur de la tension de sortie $V_{high\text{-}side}$ comprise dans la plage [$V_{high\text{-}side/min}$, $V_{high\text{-}side/max}$]. On note « pas_$V_{low\text{-}side}$ » le pas entre deux valeurs successives de la tension d'entrée $V_{low\text{-}side}$, et « pas_$V_{high\text{-}side}$ » le pas entre deux valeurs successives de la tension de sortie $V_{high\text{-}side}$.

Dans une étape 41, on obtient les constantes suivantes (voir définitions plus haut) : $V_{low\text{-}side/min}$, $V_{low\text{-}side/max}$, $V_{high\text{-}side/min}$, $V_{high\text{-}side/max}$, pas_$V_{low\text{-}side}$ et pas_$V_{high\text{-}side}$.

Dans une étape 42, on initialise la variable i avec $V_{low\text{-}side/min}$.

Dans une étape 43, on initialise la variable j avec $V_{high\text{-}side/min}$.

Dans une étape 44, on initialise la variable k avec un premier facteur limitant pris en compte pour le calcul de la valeur P1 pour le point de fonctionnement (i,j), notée « Power_map(i,j) ».

Dans une étape 45, on calcule Pmax(k,i,j), une valeur du maximum variable de la puissance de sortie, en fonction de la valeur limite du facteur limitant k et du point de fonctionnement courant (i,j). On met ensuite à jour la valeur P1 pour le point de fonctionnement (i,j), avec le calcul suivant : Power_map(i,j) = min (Power_map(i,j), Pmax(k,i,j)) .

Dans une étape 46, on détermine si la variable k contient le dernier facteur limitant pris en compte pour le calcul de Power_map(i,j) (c'est-à-dire la valeur P1 pour le point de fonctionnement (i,j)).

En cas de réponse négative au test de l'étape 46, on passe à l'étape 410 dans laquelle la variable k reçoit le facteur limitant suivant (parmi ceux pris en compte pour le calcul de Power_map(i,j) ; puis on revient à l'étape 45.

En cas de réponse positive au test de l'étape 46, on passe à l'étape 47 dans laquelle on détermine si la variable j contient $V_{high\text{-}side/max}$.

En cas de réponse négative au test de l'étape 47, on passe à l'étape 411 dans laquelle la variable j est incrémentée de pas_$V_{high\text{-}side}$ ; puis on revient à l'étape 44.

En cas de réponse positive au test de l'étape 47, on passe à l'étape 48 dans laquelle on détermine si la variable i contient $V_{low\text{-}side/max}$.

En cas de réponse négative au test de l'étape 48, on passe à l'étape 412 dans laquelle la variable i est incrémentée de pas_$V_{low\text{-}side}$ ; puis on revient à l'étape 43.

En cas de réponse positive au test de l'étape 48, on passe à l'étape 49 dans laquelle on génère la table « Power_map », en stockant pour chaque point de fonctionnement (i,j) la valeur Power_map(i,j) associée qui a été calculée à la dernière itération de l'étape 45 pour ce point de fonctionnement (i,j).

Les étapes 42 à 48 de l'algorithme décrit plus haut peuvent s'écrire de manière simplifiée comme suit :

$i = V_{low\text{-}side/min}$

*While* $i <= V_{low\text{-}side/max}$

$j = V_{high\text{-}side/min}$

*While* $j <= V_{high\text{-}side/max}$

*For « liste des facteurs limitants »*

*Calcul Pmax(facteur limitant,i,j)*

*Power_map(i,j) = min (Power_map(i,j), Pmax(facteur limitant,i,j)*

*Next*

$j = j + Pas_V_{high}$

*do*

$i = i + Pas_V_{low}$

*do*

La ***figure 5*** illustre un exemple de table obtenue en exécutant l'algorithme de la figure 4. La première colonne 51 contient la plage [$V_{low\text{-}side/min}$, $V_{low\text{-}side/max}$] exprimée en V, avec : $V_{low\text{-}side/min}$ = 200V, $V_{low\text{-}side/max}$ = 500V et pas_$V_{low\text{-}side}$ = 10V. La première ligne 52 contient la plage [$V_{high\text{-}side/min}$, $V_{high\text{-}side/max}$] (en Volts), avec : $V_{high\text{-}side/min}$ = 300V, $V_{high\text{-}side/max}$ = 750V et pas_$V_{high\text{-}side}$ = 10V. Chaque case à une intersection ligne i/colonne j (correspondant à un couple ($V_{low\text{-}side}$, $V_{high\text{-}side}$) contient la valeur Power_map(i,j) associée, exprimée en kW. Par exemple, pour le point de fonctionnement ($V_{low\text{-}side}$ = 490V, $V_{high\text{-}side}$ = 510V), on a : Power_map(i,j) = 9,5 kW (case référencée 53).

La ***figure 7*** est un exemple de tableau de puissances maximales obtenues, pour divers points de fonctionnement, avec le convertisseur de la figure 3 (mode de réalisation particulier de l'invention). La première colonne 71 contient la plage [$V_{low\text{-}side/min}$. $V_{low\text{-}side/max}$] exprimée en V, avec : $V_{low\text{-}side/min}$ = 400V et $V_{low\text{-}side/max}$ = 600V. La première ligne 72 contient la plage [$V_{high\text{-}side/min}$, $V_{high\text{-}side/max}$] (en Volts), avec : $V_{high\text{-}side/min}$ = 500V et $V_{high\text{-}side/max}$ = 700V. Chaque case à une intersection ligne/colonne, correspondant à un couple ($V_{low\text{-}side}$, $V_{high\text{-}side}$), contient la valeur de puissance maximale associée, exprimée en kW. Par exemple, pour le point de fonctionnement ($V_{low\text{-}side}$ = 600V, $V_{high\text{-}side}$ = 590V), on a une puissance maximale de 21 kW (case référencée 73).

La zone référencée 74 regroupe les valeurs de puissance maximale qui se distinguent de celles indiquées, pour les mêmes points de fonctionnement, dans l'exemple de la figure 6 (tableau de puissances maximales obtenues, pour divers points de fonctionnement, avec le convertisseur connu de la figure 1 et les constantes suivantes : $I_{low\text{-}side/max}$ = 38A, $I_{high\text{-}side/max}$ = 32A et $P_{max}$ = 18kW). On voit que le convertisseur de la figure 3 donne de meilleurs résultats que le convertisseur connu de la figure 1 puisque les valeurs de la zone 74 sont supérieures à celles correspondantes sur la figure 1, et pour certaines sont mêmes supérieures à 18kW qui était la limite de la première contrainte (constante : $P_{max}$ = 18kW).

La ***figure 8*** présente un organigramme d'un procédé, selon un mode de réalisation particulier de l'invention, de contrôle d'au moins une deuxième grandeur physique d'un convertisseur (par exemple de type DC/DC, sans que ce soit limitatif). La deuxième grandeur physique du convertisseur possède un maximum fixe (et non pas variable comme pour la première grandeur physique) pour la pluralité de points de fonctionnement possibles. Ce maximum fixe possède une valeur appelée ci-après P3.

Dans la suite de la description, on se place à titre d'exemple dans le cas particulier où la deuxième grandeur physique contrôlée est la température de puce d'un composant compris dans le convertisseur. Dans d'autres modes de réalisation, le contrôle de la température de puce d'un composant est complété ou remplacé par le contrôle d'une ou plusieurs autre(s) deuxième(s) grandeur(s) physique(s), possédant chacune un maximum fixe pour la pluralité de points de fonctionnement possibles.

Le contrôle précité (où la deuxième grandeur physique contrôlée est la température de puce d'un composant compris dans le convertisseur) peut être complété ou remplacé par le contrôle d'une ou plusieurs autre(s) deuxième(s) grandeur(s) physique(s), possédant chacune un maximum fixe pour la pluralité de points de fonctionnement possibles :

- la température d'un composant ;

- la température d'un élément à proximité d'un composant ou de la puce d'un composant (par exemple la semelle du boîtier d'un composant ou la semelle de la puce d'un composant) ;
- la tension d'un point à l'intérieur du convertisseur ;
- l'écart de tension entre deux points à l'intérieur du convertisseur ;
- ...

Dans l'exemple de la figure 8, le procédé comprend les étapes 81 à 85 qui, après l'étape de début 81, sont effectuées de manière itérative (c'est-à-dire pour des points de fonctionnement successifs dans le temps).
Etape 82 : détermination d'un point de fonctionnement courant du convertisseur parmi la pluralité de points de fonctionnement possibles.
Etape 83 : détermination (par mesure et/ou calcul) d'une valeur courante de la deuxième grandeur physique, appelée quatrième valeur P4.
Etape 84 : comparaison de P4 avec P3. Dans une implémentation particulière, test « P4 est-elle supérieure ou égale à P3 ? ».
Etape 85 : activation ou non d'un moyen de limitation de la deuxième grandeur physique, en fonction du résultat de la comparaison de l'étape 84. Dans une implémentation particulière, limitation de la deuxième grandeur physique si P4 est supérieure ou égale à P3.

**Revendications**

1. Procédé de contrôle d'un convertisseur d'énergie électrique, **caractérisé en ce qu'**il comprend les étapes suivantes, pour au moins une première grandeur physique du convertisseur possédant un maximum variable en fonction d'une pluralité de points de fonctionnement possibles, chacun des points de fonctionnement possibles étant associé à une valeur du maximum variable et étant défini par une valeur d'au moins un paramètre de fonctionnement du convertisseur :

   - détermination d'un point de fonctionnement courant du convertisseur parmi ladite pluralité de points de fonctionnement possibles ;
   - détermination de la valeur du maximum variable associée au point de fonctionnement courant, appelée première valeur (P1);
   - détermination d'une valeur courante de ladite au moins une première grandeur physique, appelée deuxième valeur (P2) ; et
   - activation ou non d'un moyen de limitation de ladite au moins une première grandeur physique, en fonction d'un résultat d'une comparaison entre la première valeur (P1) et la deuxième valeur (P2).

2. Procédé selon la revendication 1, **caractérisé en ce que** le moyen de limitation de ladite au moins une première grandeur physique est activé si la deuxième valeur (P2) est supérieure ou égale à la première valeur (P1).

3. Procédé selon la revendication 1 ou 2, **caractérisé en ce que** dans la détermination de la première valeur :

   - si un unique facteur limitant de ladite au moins une première grandeur physique est pris en compte et possède une valeur limite, la première valeur (P1) résulte du calcul suivant:

     * calcul de la première valeur en fonction de la valeur limite du facteur limitant et du point de fonctionnement courant ; et

   - si une pluralité de facteurs limitants de ladite au moins une première grandeur physique sont pris en compte et possèdent chacun une valeur limite associée, la première valeur résulte des calculs suivants :

     * pour chacun des facteurs limitants, calcul d'une valeur du maximum variable de ladite au moins une première grandeur physique, en fonction de la valeur limite du facteur limitant et du point de fonctionnement courant ; et
     * sélection pour la première valeur d'une valeur minimale parmi les valeurs du maximum variable calculées pour la pluralité de facteurs limitants.

4. Procédé selon la revendication 3, **caractérisé en ce que** l'unique facteur limitant ou chacun des facteurs limitants appartient au groupe comprenant :

- courant d'entrée du convertisseur ;
- courant de sortie du convertisseur ;
- ondulation du courant d'entrée du convertisseur ;
- ondulation du courant de sortie du convertisseur ;
- rapport cyclique du convertisseur ;
- température d'une puce électronique intégrant au moins un composant compris dans le convertisseur, notamment une diode ou un transistor ;
- température d'un élément selfique compris dans le convertisseur ;
- courant traversant une puce électronique intégrant au moins un composant compris dans le convertisseur, notamment une diode ou un transistor ;
- courant traversant un élément selfique compris dans le convertisseur ;
- puissance dissipée par un élément selfique compris dans le convertisseur ;
- courant de saturation d'un élément selfique compris dans le convertisseur ; et
- facteur extérieur au convertisseur.

**5.** Procédé selon l'une quelconque des revendications 1 à 4, **caractérisé en ce que** ladite au moins une première grandeur physique appartient au groupe comprenant :

- une puissance de sortie du convertisseur ;
- une puissance d'entrée du convertisseur ;
- un courant de sortie du convertisseur ;
- un courant d'entrée du convertisseur ; et
- des pertes dans le convertisseur.

**6.** Procédé selon l'une quelconque des revendications 1 à 5, **caractérisé en ce que** la détermination de la première valeur (P1) comprend une interrogation, en fonction du point de fonctionnement courant du convertisseur, d'une table préalablement calculée et associant à chacun des points de fonctionnement possibles une valeur du maximum variable.

**7.** Procédé selon l'une quelconque des revendications 1 à 5, **caractérisé en ce que** la détermination de la première valeur (P1) comprend un calcul, au moins partiellement dynamique, de la première valeur en fonction du point de fonctionnement courant du convertisseur.

**8.** Procédé selon l'une quelconque des revendications 1 à 7, **caractérisé en ce qu'**il comprend les étapes suivantes, pour au moins une deuxième grandeur physique du convertisseur possédant un maximum fixe pour la pluralité de points de fonctionnement possibles, le maximum fixe possédant une troisième valeur (P3) :

- détermination d'une valeur courante de ladite au moins une deuxième grandeur physique, appelée quatrième valeur (P4) ; et
- activation ou non d'un moyen de limitation de ladite au moins une deuxième grandeur physique, en fonction d'un résultat d'une comparaison entre la troisième valeur (P3) et la quatrième valeur (P4).

**9.** Procédé selon la revendication 8, **caractérisé en ce que** le moyen de limitation de ladite au moins une deuxième grandeur physique est activé si la quatrième valeur (P4) est supérieure ou égale à la troisième valeur (P3).

**10.** Procédé selon l'une quelconque des revendications 8 et 9, **caractérisé en ce que** ladite au moins une deuxième grandeur physique appartient au groupe comprenant :

- température de puce d'un composant compris dans le convertisseur ; et
- température d'un composant compris dans le convertisseur ;
- température d'un élément à proximité d'un composant compris dans le convertisseur ou à proximité d'une puce d'un composant compris dans le convertisseur ;
- tension d'un point à l'intérieur du convertisseur ; et
- écart de tension entre deux points à l'intérieur du convertisseur.

**11.** Procédé selon l'une quelconque des revendications 1 à 10, **caractérisé en ce que** ledit au moins un paramètre de fonctionnement du convertisseur appartient au groupe comprenant :

- température ambiante ;
- température de refroidissement ;
- tension d'entrée ;
- tension de sortie ;
- résistance thermique ;
- tension directe $V_f$ d'au moins une diode comprise dans le convertisseur ;
- résistance $R_{dson}$ d'au moins un transistor compris dans le convertisseur ;
- caractéristique de pertes en commutation d'au moins un élément de commutation du convertisseur ;
- résistance électrique d'au moins un conducteur de courant du convertisseur ;
- caractéristique d'au moins un élément bobiné du convertisseur ;
- résistance thermique d'au moins un élément de refroidissement du convertisseur.

**12.** Convertisseur d'énergie électrique, **caractérisé en ce qu'**il comprend, pour au moins une première grandeur physique du convertisseur possédant un maximum variable en fonction d'une pluralité de points de fonctionnement possibles, chacun des points de fonctionnement possibles étant associé à une valeur du maximum variable et étant défini par une valeur courante d'au moins un paramètre de fonctionnement du convertisseur :

- des moyens de détermination d'un point de fonctionnement courant du convertisseur parmi ladite pluralité de points de fonctionnement possibles ;
- des moyens de détermination de la valeur du maximum variable associée au point de fonctionnement courant, appelée première valeur (P1);
- des moyens de détermination d'une valeur courante de ladite au moins une première grandeur physique, appelée deuxième valeur (P2) ; et
- des moyens d'activation ou non d'un moyen de limitation de ladite au moins une première grandeur physique, en fonction d'un résultat d'une comparaison entre la première valeur (P1)et la deuxième valeur (P2).

**13.** Convertisseur selon la revendication 12, **caractérisé en ce qu'**il comprend en outre, pour au moins une deuxième grandeur physique du convertisseur possédant un maximum fixe pour la pluralité de points de fonctionnement possibles, le maximum fixe possédant une troisième valeur (P3) :

- des moyens de détermination d'une valeur courante de ladite au moins une deuxième grandeur physique, appelée quatrième valeur (P4) ; et
- des moyens d'activation ou non d'un moyen de limitation de ladite au moins une deuxième grandeur physique, en fonction d'un résultat d'une comparaison entre la troisième valeur (P3) et la quatrième valeur (P4).

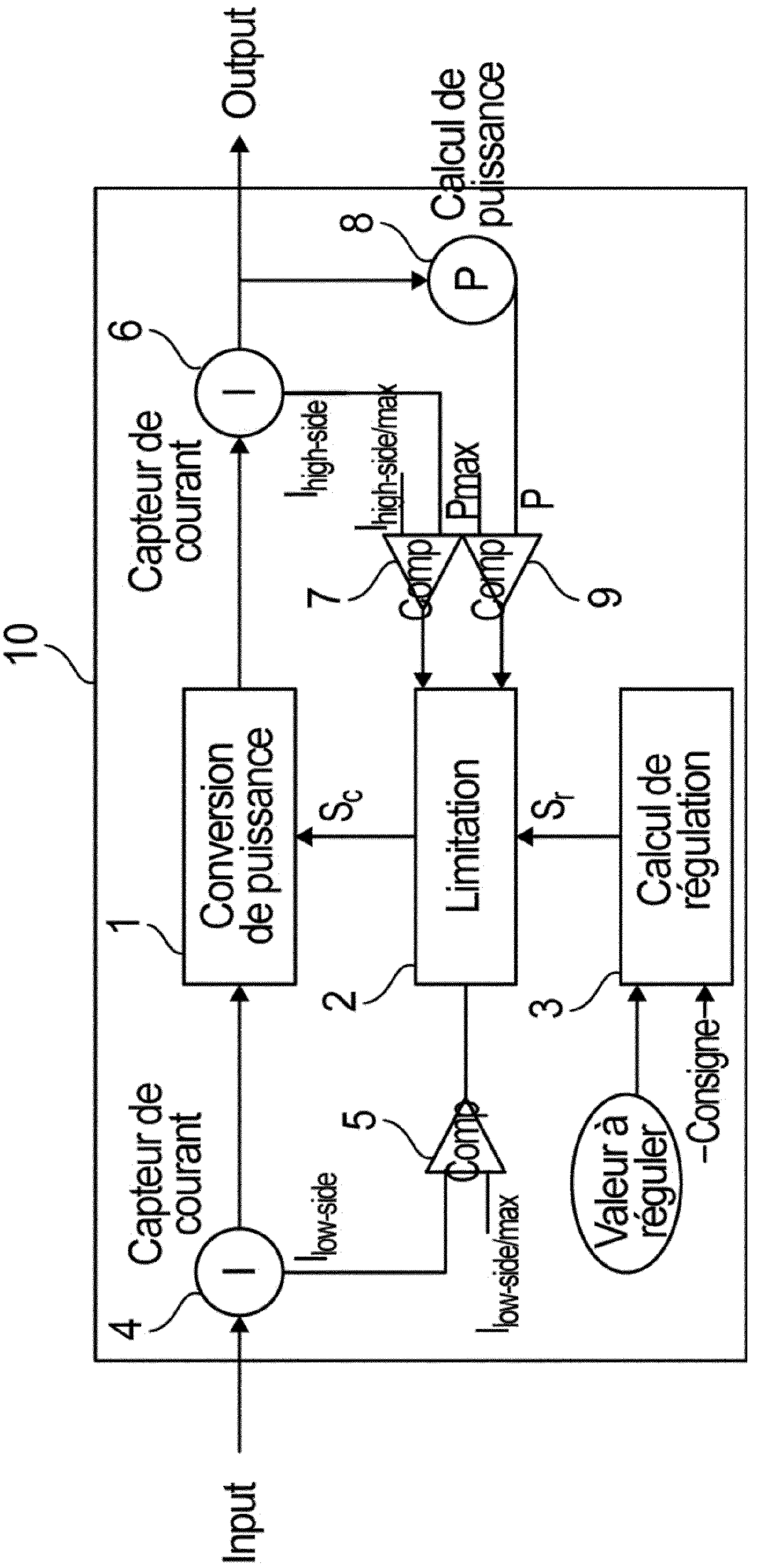
Input
Output
10
4
Capteur de courant
I
$I_{low\text{-}side}$
$I_{low\text{-}side/max}$
5
Comp
1
Conversion de puissance
$S_c$
2
Limitation
$S_r$
3
Calcul de régulation
Valeur à réguler
Consigne
6
Capteur de courant
I
$I_{high\text{-}side}$
$I_{high\text{-}side/max}$
7
Comp
Pmax
9
Comp
P
8
P
Calcul de puissance

Figure 1

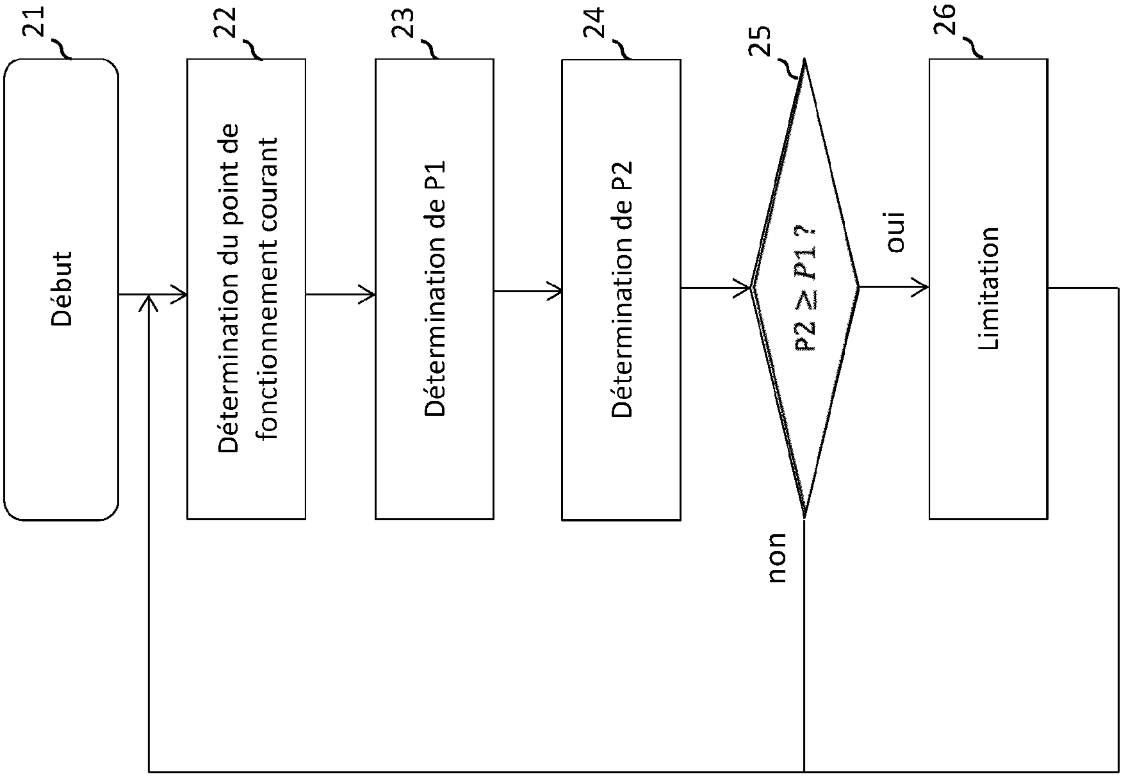
21
Début
22
Détermination du point de fonctionnement courant
23
Détermination de P1
24
Détermination de P2
25
$P2 \geq P1$ ?
oui
non
26
Limitation

**Figure 2**

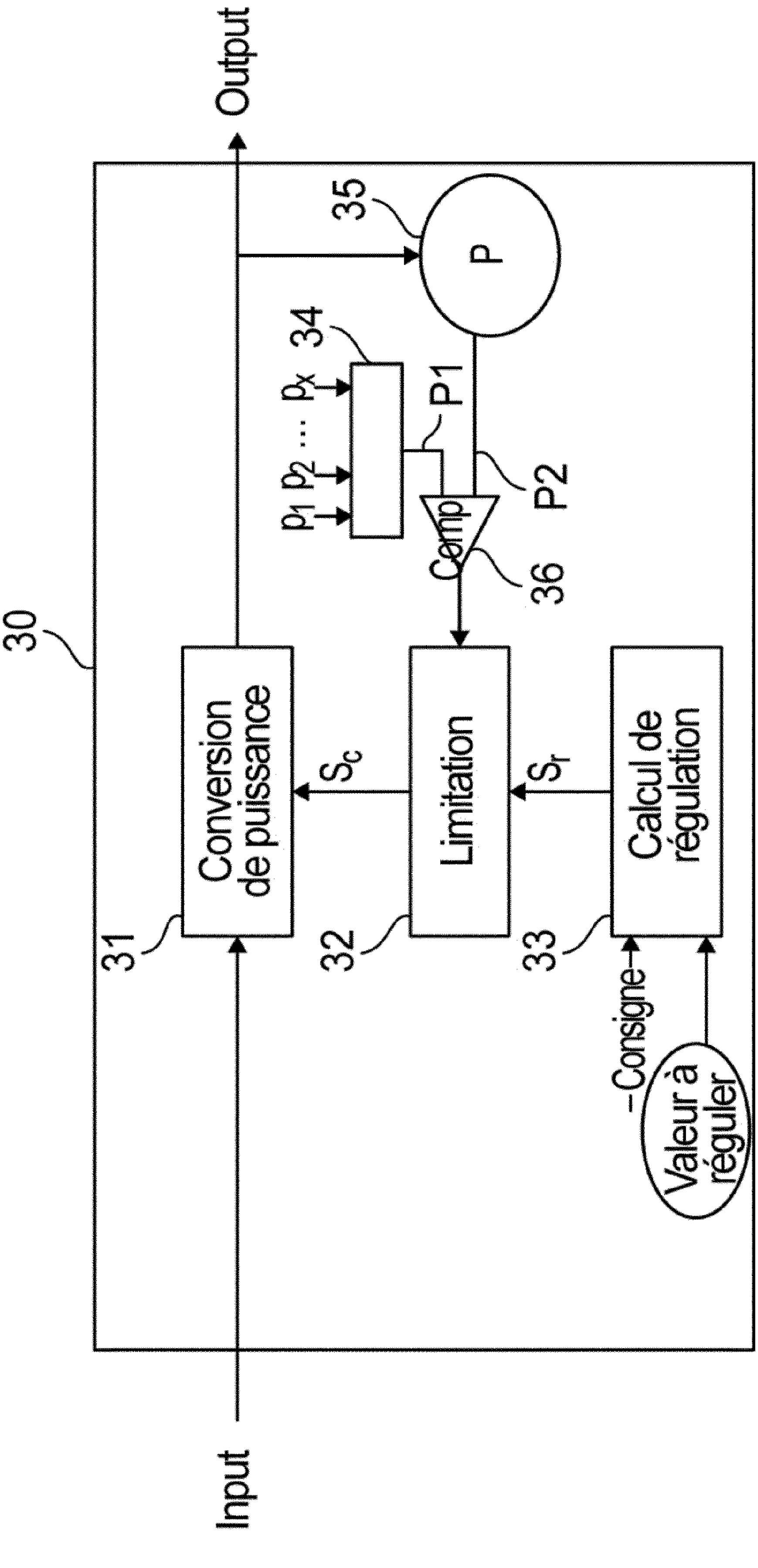
Output
Input
30
31
32
33
34
35
36
Conversion de puissance
Limitation
Calcul de régulation
$S_c$
$S_r$
P
P1
P2
Comp
$p_1$ $p_2$ ... $p_x$
Consigne
Valeur à réguler

Figure 3

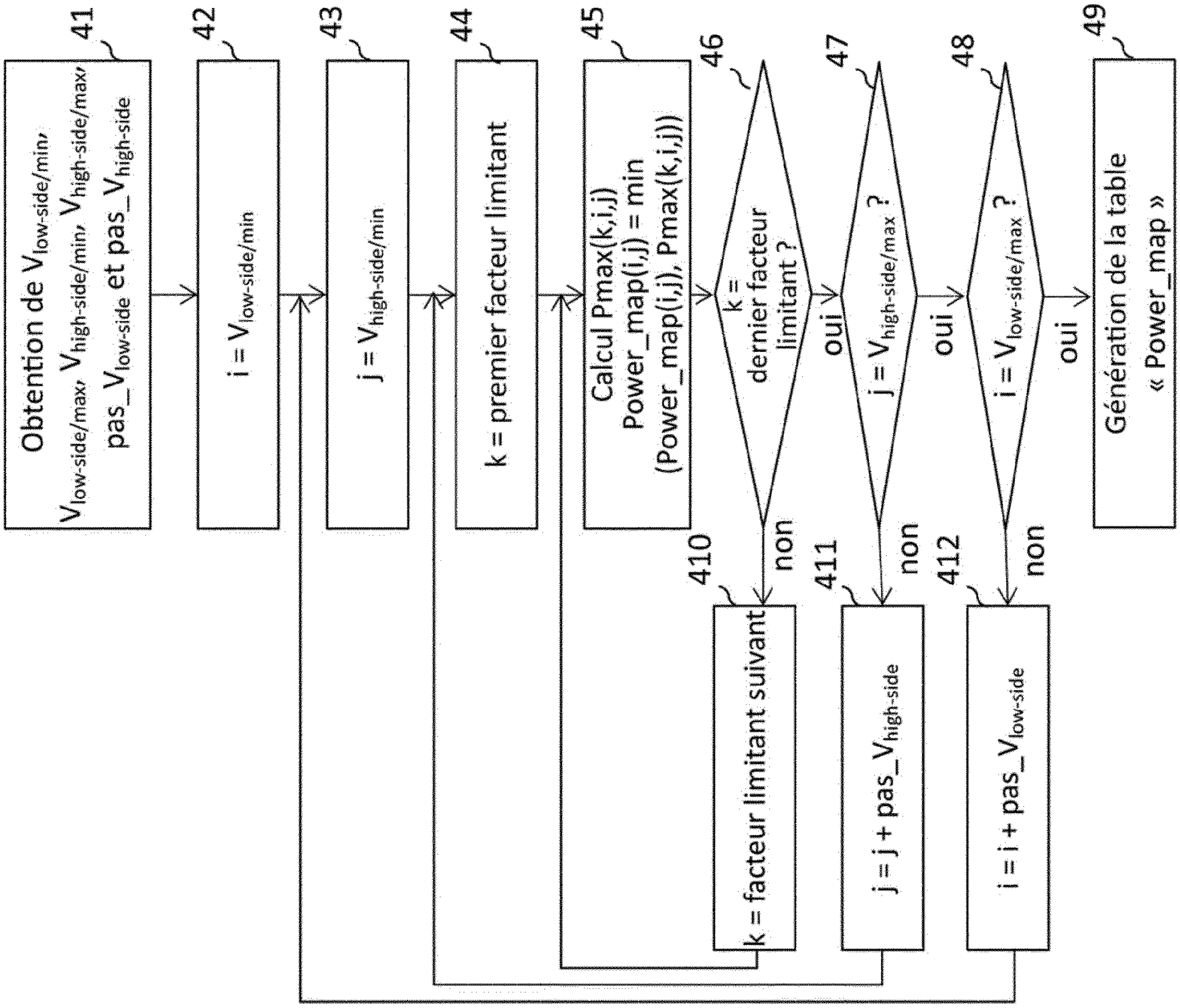
41
Obtention de $V_{low\text{-}side/min}$, $V_{low\text{-}side/max}$, $V_{high\text{-}side/min}$, $V_{high\text{-}side/max}$, pas_$V_{low\text{-}side}$ et pas_$V_{high\text{-}side}$
42
i = $V_{low\text{-}side/min}$
43
j = $V_{high\text{-}side/min}$
44
k = premier facteur limitant
45
Calcul Pmax(k,i,j)
Power_map(i,j) = min (Power_map(i,j), Pmax(k,i,j))
46
k = dernier facteur limitant ?
47
j = $V_{high\text{-}side/max}$ ?
48
i = $V_{low\text{-}side/max}$ ?
49
Génération de la table « Power_map »
oui
oui
oui
non
non
non
410
k = facteur limitant suivant
411
j = j + pas_$V_{high\text{-}side}$
412
i = i + pas_$V_{low\text{-}side}$

Figure 4

52

51

| | 300 | 310 | 320 | 330 | 340 | 350 | 360 | 370 | 380 | 390 | 400 | 410 | 420 | 430 | 440 | 450 | 460 | 470 | 480 | 490 | 500 | 510 | 520 | 530 | 540 | 550 | 560 | 570 | 580 | 590 | 600 | 610 | 620 | 630 | 640 | 650 | 660 | 670 | 680 | 690 | 700 | 710 | 720 | 730 | 740 | 750 |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| 200 | 15 | 16 | 17 | 17 | 18 | 19 | 20 | 20 | 21 | 22 | 22 | 23 | 23 | 24 | 24 | 25 | 25 | 25 | 26 | 26 | 27 | 27 | 27 | 28 | 28 | 28 | 29 | 29 | 29 | 29 | 30 | 30 | 30 | 30 | 30 | 30 | 29 | 29 | 28 | 28 | 27 | 27 | 26 | 26 | 26 | 25 |
| 210 | 15 | 16 | 17 | 18 | 19 | 20 | 20 | 21 | 22 | 23 | 23 | 24 | 24 | 25 | 26 | 26 | 27 | 27 | 28 | 28 | 28 | 29 | 29 | 30 | 30 | 30 | 31 | 31 | 31 | 31 | 32 | 32 | 32 | 32 | 32 | 31 | 31 | 30 | 29 | 29 | 29 | 28 | 28 | 27 | 27 | 26 |
| 220 | 14 | 16 | 17 | 18 | 19 | 20 | 21 | 22 | 23 | 23 | 24 | 25 | 26 | 26 | 27 | 27 | 28 | 29 | 29 | 30 | 30 | 31 | 31 | 31 | 32 | 32 | 33 | 33 | 33 | 34 | 34 | 34 | 34 | 34 | 33 | 33 | 32 | 31 | 31 | 30 | 30 | 29 | 29 | 28 | 28 | 27 |
| 230 | 14 | 15 | 16 | 18 | 19 | 20 | 21 | 22 | 23 | 24 | 25 | 26 | 27 | 27 | 28 | 29 | 29 | 30 | 31 | 31 | 32 | 32 | 33 | 33 | 34 | 34 | 35 | 35 | 35 | 36 | 36 | 36 | 35 | 35 | 35 | 34 | 33 | 33 | 32 | 32 | 31 | 31 | 30 | 29 | 29 | 28 |
| 240 | 13 | 14 | 16 | 17 | 19 | 20 | 21 | 22 | 24 | 25 | 26 | 26 | 27 | 28 | 29 | 30 | 31 | 31 | 32 | 33 | 33 | 34 | 34 | 35 | 35 | 36 | 37 | 37 | 37 | 37 | 37 | 37 | 36 | 36 | 36 | 35 | 35 | 34 | 34 | 33 | 32 | 32 | 31 | 31 | 30 | 30 |
| 250 | 11 | 13 | 15 | 17 | 18 | 20 | 21 | 22 | 24 | 25 | 26 | 27 | 28 | 29 | 30 | 31 | 32 | 32 | 33 | 34 | 35 | 35 | 36 | 37 | 37 | 38 | 38 | 39 | 39 | 39 | 38 | 38 | 37 | 37 | 37 | 36 | 36 | 36 | 35 | 34 | 34 | 33 | 33 | 32 | 31 | 31 |
| 260 | 9,5 | 12 | 14 | 16 | 17 | 19 | 21 | 22 | 24 | 25 | 26 | 27 | 29 | 30 | 31 | 32 | 33 | 34 | 34 | 35 | 36 | 37 | 38 | 38 | 39 | 40 | 40 | 41 | 40 | 40 | 39 | 39 | 38 | 38 | 38 | 37 | 37 | 37 | 36 | 36 | 35 | 34 | 34 | 33 | 33 | 32 |
| 270 | 7,5 | 10 | 12 | 15 | 16 | 18 | 20 | 22 | 23 | 25 | 26 | 28 | 29 | 30 | 31 | 32 | 33 | 34 | 35 | 36 | 37 | 38 | 39 | 40 | 40 | 41 | 42 | 42 | 42 | 41 | 40 | 40 | 40 | 39 | 39 | 38 | 38 | 38 | 37 | 37 | 37 | 36 | 35 | 34 | 34 | 33 |
| 280 | 5 | 8 | 11 | 12 | 15 | 17 | 19 | 21 | 23 | 24 | 26 | 28 | 29 | 30 | 32 | 33 | 34 | 35 | 36 | 37 | 38 | 39 | 40 | 41 | 42 | 43 | 43 | 44 | 43 | 42 | 42 | 41 | 41 | 40 | 40 | 39 | 39 | 39 | 38 | 38 | 38 | 37 | 37 | 36 | 35 | 34 |
| 290 | 2,5 | 5,5 | 8 | 11 | 13 | 16 | 18 | 20 | 22 | 24 | 26 | 27 | 29 | 30 | 32 | 33 | 34 | 36 | 37 | 38 | 39 | 40 | 41 | 42 | 43 | 44 | 45 | 45 | 44 | 44 | 43 | 43 | 42 | 41 | 41 | 40 | 40 | 40 | 39 | 39 | 38 | 38 | 38 | 37 | 36 | 36 |
| 300 | | 2,5 | 5,5 | 8 | 11 | 14 | 16 | 19 | 21 | 23 | 25 | 27 | 28 | 30 | 32 | 33 | 35 | 36 | 37 | 39 | 40 | 41 | 42 | 43 | 44 | 45 | 46 | 47 | 46 | 45 | 45 | 44 | 43 | 43 | 42 | 42 | 41 | 41 | 40 | 40 | 39 | 39 | 39 | 38 | 38 | 37 |
| 310 | | | 2,5 | 5,5 | 8,5 | 12 | 14 | 17 | 19 | 22 | 24 | 26 | 28 | 30 | 31 | 33 | 35 | 36 | 38 | 39 | 40 | 42 | 43 | 44 | 45 | 47 | 48 | 49 | 48 | 47 | 46 | 45 | 45 | 44 | 43 | 43 | 42 | 42 | 41 | 41 | 40 | 40 | 40 | 39 | 39 | 38 |
| 320 | | | | 2,5 | 6 | 9 | 12 | 15 | 18 | 20 | 22 | 25 | 27 | 29 | 31 | 33 | 34 | 36 | 38 | 39 | 41 | 42 | 44 | 45 | 46 | 48 | 49 | 50 | 50 | 51 | 48 | 47 | 46 | 46 | 45 | 44 | 44 | 43 | 43 | 42 | 42 | 41 | 41 | 40 | 40 | 40 |
| 330 | | | | | 2,5 | 6 | 9,5 | 13 | 16 | 18 | 20 | 23 | 26 | 28 | 30 | 32 | 34 | 36 | 38 | 39 | 41 | 43 | 44 | 46 | 47 | 48 | 50 | 51 | 52 | 52 | 50 | 49 | 48 | 47 | 46 | 46 | 45 | 44 | 44 | 43 | 43 | 42 | 42 | 41 | 41 | 41 |
| 340 | | | | | | 3 | 6,5 | 9,5 | 13 | 16 | 18 | 22 | 24 | 27 | 29 | 31 | 33 | 35 | 37 | 39 | 41 | 43 | 44 | 46 | 47 | 49 | 50 | 52 | 53 | 55 | 51 | 50 | 50 | 49 | 48 | 47 | 46 | 46 | 45 | 44 | 44 | 43 | 43 | 42 | 42 | 42 |
| 350 | | | | | | | 3 | 6,5 | 10 | 13 | 16 | 20 | 22 | 25 | 28 | 30 | 32 | 35 | 37 | 39 | 41 | 43 | 44 | 46 | 48 | 49 | 51 | 52 | 54 | 56 | 53 | 52 | 51 | 50 | 49 | 49 | 48 | 47 | 46 | 46 | 45 | 45 | 44 | 44 | 43 | 43 |
| 360 | | | | | | | | 3 | 6,5 | 11 | 14 | 17 | 20 | 23 | 16 | 29 | 31 | 33 | 36 | 38 | 40 | 42 | 44 | 46 | 48 | 50 | 51 | 53 | 55 | 57 | 56 | 54 | 53 | 52 | 51 | 50 | 49 | 49 | 48 | 47 | 47 | 46 | 45 | 45 | 44 | 44 |
| 370 | | | | | | | | | 3 | 7 | 11 | 14 | 18 | 21 | 24 | 27 | 29 | 32 | 35 | 37 | 39 | 42 | 44 | 46 | 48 | 50 | 51 | 53 | 55 | 57 | 58 | 57 | 55 | 54 | 53 | 52 | 51 | 50 | 49 | 49 | 48 | 47 | 47 | 46 | 45 | 45 |
| 380 | | | | | | | | | | 3 | 7 | 11 | 15 | 18 | 21 | 25 | 28 | 30 | 33 | 36 | 38 | 41 | 43 | 45 | 47 | 49 | 51 | 53 | 55 | 57 | 59 | 59 | 58 | 56 | 55 | 54 | 53 | 52 | 51 | 50 | 49 | 49 | 48 | 47 | 47 | 46 |
| 390 | | | | | | | | | | | 3,5 | 7,5 | 11 | 15 | 19 | 22 | 25 | 28 | 31 | 34 | 37 | 40 | 42 | 44 | 47 | 49 | 51 | 53 | 55 | 57 | 59 | 61 | 60 | 59 | 57 | 56 | 55 | 54 | 53 | 52 | 51 | 50 | 49 | 49 | 48 | 47 |
| 400 | | | | | | | | | | | | 3,5 | 7,5 | 12 | 16 | 19 | 23 | 26 | 29 | 32 | 35 | 38 | 41 | 43 | 46 | 48 | 51 | 53 | 55 | 57 | 59 | 61 | 63 | 61 | 60 | 58 | 57 | 56 | 55 | 54 | 53 | 52 | 51 | 50 | 49 | 49 |
| 410 | | | | | | | | | | | | | 3,5 | 8 | 12 | 16 | 20 | 23 | 27 | 30 | 33 | 36 | 39 | 42 | 45 | 47 | 50 | 52 | 55 | 57 | 59 | 61 | 63 | 64 | 62 | 61 | 59 | 58 | 57 | 56 | 54 | 53 | 53 | 52 | 51 | 50 |
| 420 | | | | | | | | | | | | | | 3,5 | 8 | 12 | 16 | 20 | 24 | 28 | 31 | 34 | 37 | 40 | 43 | 46 | 49 | 51 | 54 | 56 | 59 | 61 | 63 | 65 | 65 | 63 | 62 | 60 | 59 | 58 | 56 | 55 | 54 | 53 | 52 | 52 |
| 430 | | | | | | | | | | | | | | | 3,5 | 8 | 13 | 17 | 21 | 25 | 28 | 32 | 35 | 38 | 42 | 45 | 47 | 50 | 53 | 56 | 58 | 60 | 63 | 65 | 67 | 66 | 64 | 63 | 61 | 60 | 58 | 57 | 56 | 55 | 54 | 53 |
| 440 | | | | | | | | | | | | | | | | 3,5 | 8,5 | 13 | 17 | 21 | 25 | 29 | 33 | 36 | 39 | 43 | 46 | 49 | 52 | 54 | 57 | 60 | 62 | 65 | 67 | 69 | 67 | 65 | 63 | 62 | 61 | 59 | 58 | 57 | 56 | 55 |
| 450 | | | | | | | | | | | | | | | | | 4 | 8,5 | 13 | 18 | 22 | 26 | 30 | 34 | 37 | 41 | 44 | 47 | 50 | 53 | 56 | 59 | 61 | 64 | 67 | 69 | 70 | 68 | 66 | 64 | 63 | 61 | 60 | 59 | 58 | 57 |
| 460 | | | | | | | | | | | | | | | | | | 4 | 9 | 14 | 18 | 22 | 27 | 31 | 34 | 38 | 42 | 45 | 48 | 51 | 55 | 58 | 60 | 63 | 66 | 69 | 71 | 71 | 69 | 67 | 65 | 64 | 62 | 61 | 60 | 59 |
| 470 | | | | | | | | | | | | | | | | | | | 4 | 9 | 14 | 19 | 23 | 27 | 31 | 35 | 39 | 43 | 46 | 50 | 53 | 56 | 59 | 62 | 65 | 68 | 70 | 73 | 72 | 70 | 68 | 66 | 65 | 63 | 62 | 61 |
| 480 | | | | | | | | | | | | | | | | | | | | 4 | 9 | 14 | 19 | 24 | 28 | 32 | 36 | 40 | 44 | 47 | 51 | 54 | 57 | 61 | 64 | 67 | 70 | 72 | 75 | 73 | 71 | 69 | 67 | 66 | 64 | 63 |
| 490 | | | | | | | | | | | | | | | | | | | | | 4 | 9,5 | 15 | 19 | 24 | 28 | 33 | 37 | 41 | 45 | 49 | 52 | 56 | 59 | 62 | 65 | 68 | 71 | 74 | 77 | 74 | 72 | 70 | 68 | 67 | 35 |
| 500 | | | | | | | | | | | | | | | | | | | | | | 4,5 | 9,5 | 15 | 20 | 25 | 29 | 34 | 38 | 42 | 46 | 50 | 53 | 57 | 60 | 64 | 67 | 70 | 73 | 76 | 78 | 75 | 73 | 71 | 69 | 68 |

53

**Figure 5**

61 62

| | 500 | 510 | 520 | 530 | 540 | 550 | 560 | 570 | 580 | 590 | 600 | 610 | 620 | 630 | 640 | 650 | 660 | 670 | 680 | 690 | 700 |
|---|---|---|---|---|---|---|---|---|---|---|---|---|---|---|---|---|---|---|---|---|---|
| 400 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 |
| 410 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 |
| 420 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 |
| 430 | 16 | 16,32 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 |
| 440 | 16 | 16,32 | 16,64 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 |
| 450 | 16 | 16,32 | 16,64 | 16,96 | 17,1 | 17,1 | 17,1 | 17,1 | 17,1 | 17,1 | 17,1 | 17,1 | 17,1 | 17,1 | 17,1 | 17,1 | 17,1 | 17,1 | 17,1 | 17,1 | 17,1 |
| 460 | 16 | 16,32 | 16,64 | 16,96 | 17,28 | 17,48 | 17,48 | 17,48 | 17,48 | 17,48 | 17,48 | 17,48 | 17,48 | 17,48 | 17,48 | 17,48 | 17,48 | 17,48 | 17,48 | 17,48 | 17,48 |
| 470 | 16 | 16,32 | 16,64 | 16,96 | 17,28 | 17,6 | 17,86 | 17,86 | 17,86 | 17,86 | 17,86 | 17,86 | 17,86 | 17,86 | 17,86 | 17,86 | 17,86 | 17,86 | 17,86 | 17,86 | 17,86 |
| 480 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 490 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 500 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 510 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 520 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 530 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 540 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 550 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 560 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 570 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 580 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 590 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |
| 600 | 16 | 16,32 | 16,64 | 16,96 | 17,28 | 17,6 | 17,92 | 18 | 18 | 18 | 18 | 18 | 18 | 18 | 18 | 18 | 18 | 18 | 18 | 18 | 18 |

63 64

Figure 6

71 72

| | 500 | 510 | 520 | 530 | 540 | 550 | 560 | 570 | 580 | 590 | 600 | 610 | 620 | 630 | 640 | 650 | 660 | 670 | 680 | 690 | 700 |
|---|---|---|---|---|---|---|---|---|---|---|---|---|---|---|---|---|---|---|---|---|---|
| 400 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 | 15,2 |
| 410 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 | 15,58 |
| 420 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 | 15,96 |
| 430 | 16 | 16,32 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 | 16,34 |
| 440 | 16 | 16,32 | 16,64 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 | 16,72 |
| 450 | 16 | 16,32 | 16,64 | 16,96 | 17,1 | 17,1 | 17,1 | 17,1 | 17,1 | 17,1 | 17,1 | 17,1 | 17,1 | 17,1 | 17,1 | 17,1 | 17,1 | 17,1 | 17,1 | 17,1 | 17,1 |
| 460 | 16 | 16,32 | 16,64 | 16,96 | 17,28 | 17,48 | 17,48 | 17,48 | 17,48 | 17,48 | 17,48 | 17,48 | 17,48 | 17,48 | 17,48 | 17,48 | 17,48 | 17,48 | 17,48 | 17,48 | 17,48 |
| 470 | 16 | 16,32 | 16,64 | 16,96 | 17,28 | 17,6 | 18 | 18 | 18 | 18 | 18 | 18 | 18 | 18 | 18 | 18 | 18 | 18 | 18 | 18 | 18 |
| 480 | 16 | 16,32 | 16,64 | 16,96 | 17,28 | 18 | 19 | 19 | 19 | 19 | 19 | 19 | 19 | 19 | 19 | 19 | 19 | 19 | 19 | 19 | 19 |
| 490 | 16 | 16,32 | 16,64 | 16,96 | 17,28 | 18 | 19 | 20 | 20 | 20 | 20 | 20 | 20 | 20 | 20 | 20 | 20 | 20 | 20 | 20 | 20 |
| 500 | 16 | 16,32 | 16,64 | 16,96 | 17,28 | 18 | 19 | 20 | 20 | 20 | 20 | 20 | 20 | 20 | 20 | 20 | 20 | 20 | 20 | 20 | 20 |
| 510 | 16 | 16,32 | 16,64 | 16,96 | 17,28 | 18 | 19 | 20 | 20 | 21 | 21 | 21 | 21 | 21 | 21 | 21 | 21 | 21 | 21 | 21 | 20 |
| 520 | 16 | 16,32 | 16,64 | 16,96 | 17,28 | 18 | 19 | 20 | 20 | 21 | 21 | 21 | 21 | 21 | 21 | 21 | 21 | 21 | 21 | 20 | 20 |
| 530 | 16 | 16,32 | 16,64 | 16,96 | 17,28 | 18 | 19 | 20 | 20 | 21 | 21 | 22 | 22 | 22 | 22 | 21 | 21 | 21 | 20 | 20 | 20 |
| 540 | 16 | 16,32 | 16,64 | 16,96 | 17,28 | 18 | 19 | 20 | 20 | 21 | 21 | 22 | 22 | 22 | 22 | 21 | 21 | 20 | 20 | 20 | 20 |
| 550 | 16 | 16,32 | 16,64 | 16,96 | 17,28 | 18 | 19 | 20 | 20 | 21 | 21 | 22 | 21 | 21 | 21 | 21 | 20 | 20 | 20 | 20 | 19 |
| 560 | 16 | 16,32 | 16,64 | 16,96 | 17,28 | 18 | 19 | 20 | 20 | 21 | 21 | 22 | 21 | 21 | 21 | 20 | 20 | 20 | 20 | 19 | 19 |
| 570 | 16 | 16,32 | 16,64 | 16,96 | 17,28 | 18 | 19 | 20 | 20 | 21 | 21 | 21 | 21 | 21 | 20 | 20 | 20 | 20 | 19 | 19 | 19 |
| 580 | 16 | 16,32 | 16,64 | 16,96 | 17,28 | 18 | 19 | 20 | 20 | 21 | 21 | 21 | 21 | 20 | 20 | 20 | 20 | 19 | 19 | 19 | 18 |
| 590 | 16 | 16,32 | 16,64 | 16,96 | 17,28 | 18 | 19 | 20 | 20 | 21 | 21 | 21 | 20 | 20 | 20 | 20 | 19 | 19 | 19 | 18 | 18 |
| 600 | 16 | 16,32 | 16,64 | 16,96 | 17,28 | 18 | 19 | 20 | 20 | 21 | 21 | 20 | 20 | 20 | 20 | 19 | 19 | 19 | 18 | 18 | 18 |

73 74

**Figure 7**

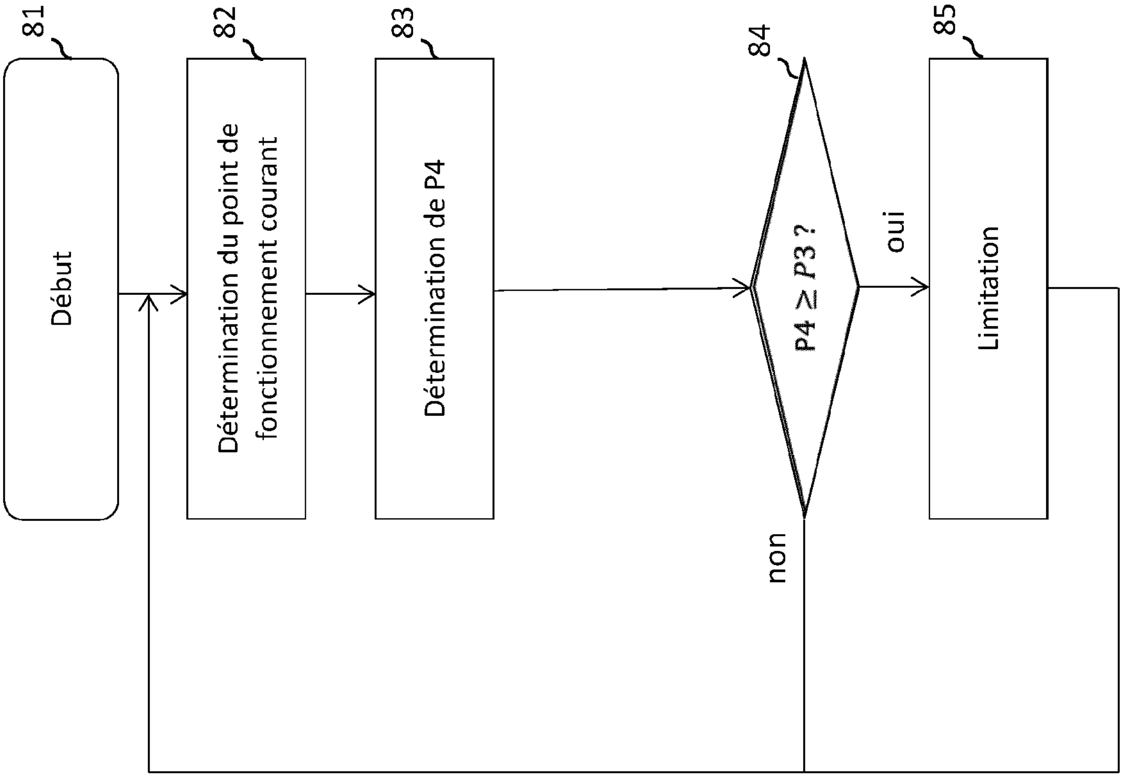
81
Début
82
Détermination du point de fonctionnement courant
83
Détermination de P4
84
$P4 \geq P3$ ?
oui
non
85
Limitation

**Figure 8**

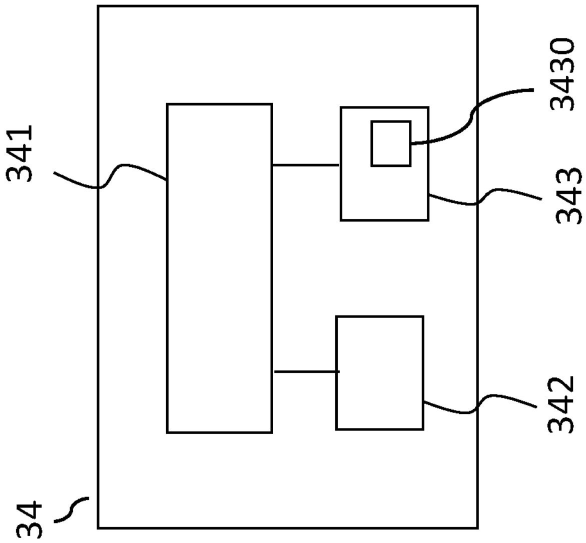


Figure 9

Europäisches Patentamt
European Patent Office
Office européen des brevets

# RAPPORT DE RECHERCHE EUROPEENNE

Numéro de la demande
EP 21 16 7935

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/007082 A1 (BRETZ JOSHUA H [US] ET AL) 13 janvier 2005 (2005-01-13)<br>* figure 22 *<br>* alinéa [0109] * | 1,12 | INV.<br>H02M1/32 |
| X<br><br>A | US 10 103 663 B1 (GEN ELECTRIC [US]) 16 octobre 2018 (2018-10-16)<br>* figures 3,5 *<br>* page 4, lignes 4-17 * | 1,2,4-13<br><br>3 | |
| X | US 2017/054291 A1 (QI LI [US] ET AL) 23 février 2017 (2017-02-23)<br>* figure 2 *<br>* alinéa [0009] * | 1,12 | |
| X | KR 101 659 901 B1 (ADTECH CO LTD [KR]) 26 septembre 2016 (2016-09-26)<br>* figure 3 *<br>* page 0032 * | 1,12 | |

DOMAINES TECHNIQUES RECHERCHES (IPC)

H02M

Le présent rapport a été établi pour toutes les revendications

2

| Lieu de la recherche | Date d'achèvement de la recherche | Examinateur |
|---|---|---|
| La Haye | 18 août 2021 | Gotzig, Bernhard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 21 16 7935

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-08-2021

| Document brevet cité au rapport de recherche | Date de publication | Membre(s) de la famille de brevet(s) | Date de publication |
|---|---|---|---|
| US 2005007082 A1 | 13-01-2005 | US 6894468 B1 | 17-05-2005 |
| | | US 2005007082 A1 | 13-01-2005 |
| US 10103663 B1 | 16-10-2018 | AUCUN | |
| US 2017054291 A1 | 23-02-2017 | CN 107210603 A | 26-09-2017 |
| | | EP 3140892 A1 | 15-03-2017 |
| | | KR 20170015913 A | 10-02-2017 |
| | | SG 11201609239S A | 29-12-2016 |
| | | US 2017054291 A1 | 23-02-2017 |
| | | WO 2015168830 A1 | 12-11-2015 |
| KR 101659901 B1 | 26-09-2016 | AUCUN | |

EPO FORM P0460

Pour tout renseignement concernant cette annexe : voir Journal Officiel de l'Office européen des brevets, No.12/82